Europäisches Patentamt

European Patent Office

Office européen des brevets

(11) Veröffentlichungsnummer: **0 284 671**
**B1**

(12) **EUROPÄISCHE PATENTSCHRIFT**

(45) Veröffentlichungstag der Patentschrift:
05.12.90

(51) Int. Cl.⁵: **G01B 5/00**

(21) Anmeldenummer: **87119242.3**

(22) Anmeldetag: **28.12.87**

(54) **Messeinrichtung.**

(30) Priorität: **20.03.87 DE 3709220**

(43) Veröffentlichungstag der Anmeldung:
**05.10.88 Patentblatt 88/40**

(45) Bekanntmachung des Hinweises auf die Patenterteilung:
**05.12.90 Patentblatt 90/49**

(84) Benannte Vertragsstaaten:
**AT CH DE ES FR GB IT LI NL SE**

(56) Entgegenhaltungen:
**EP-A- 0 126 888**
**EP-A- 0 163 857**
**DE-A- 1 773 403**
**FR-A- 2 308 907**

(73) Patentinhaber: **DR. JOHANNES HEIDENHAIN GMBH,
Dr.-Johannes-Heidenhain-Strasse 5 Postfach 1260,
D-8225 Traunreut(DE)**

(72) Erfinder: **Nelle, Günther, Dr.-Ing., Eichenweg 12,
D-8221 Bergen(DE)**

**Beschreibung**

Die Erfindung bezieht sich auf eine Meßeinrichtung gemäß dem Oberbegriff des Anspruches 1.

Derartige Meßeinrichtungen sind bekannt. Als Beispiele seien die DE-OS 17 73 403 und die DE-OS 34 19 527 genannt. In der erstgenannten Druckschrift wird eine Längenmeßeinrichtung beschrieben, bei der ein biegesteifer Maßstab über Auflage-Füßchen fest mit einem der Maschinen-Bauteile verbunden ist, deren Relativlage gemessen werden soll. Der Maßstab ist von einem Gehäuse umgeben, das sowohl vom Maßstab als auch vom Maschinen-Bauteil mechanisch abgekoppelt ist. Dazu dienen elastische Zwischenkörper an den Auflage-Füßchen der Maßstabhalterung. Das Problem des gegenseitigen Temperaturverhaltens von Maßstab und Maschinen-Bauteil wird dort nicht angesprochen.

In der DE-OS 34 19 527 sind ebenfalls Längenmeßeinrichtungen beschrieben. In einem der Ausführungsbeispiele ist ein biegesteifer Maßstab fest zwischen zwei Befestigungselementen verspannt, die auf einem der Maschinen-Bauteile, deren Relativbewegungen gemessen werden sollen, befestigt sind. Zur Kalibrierung des Maßstabes auf die Montagetemperatur ist eine Stelleinrichtung an einem der Befestigungselemente vorgesehen, die nach der Montage außer Eingriff gebracht wird. Dieser Druckschrift ist allerdings nicht zu entnehmen, wie Zugkräfte auf den Maßstab übertragen werden könnten.

Keine der genannten Druckschriften gibt Hinweise auf eine betriebssichere Montage der Maßverkörperung, die verhindern kann, daß es durch Anbautoleranzen und/oder durch temperaturbedingte Längenänderungen und/oder Verlagerungen zwischen der Maßverkörperung und dem Maschinen-Bauteil zu zerstörerischen Spannungen in der Maßverkörperung kommt.

Der Erfindung liegt die Aufgabe zugrunde, eine Meßeinrichtung zu schaffen, bei der die Befestigungsvorrichtung für die Maßverkörperung am zu messenden Maschinen-Bauteil so ausgebildet ist, daß bei temperaturbedingten Längenänderungen des Maschinen-Bauteiles diese Längenänderungen vorzeichenrichtig auf die Maßverkörperung übertragen werden. Jegliche Spannungen, die in anderer Richtung als der Längsrichtung auftreten, müssen jedoch von der Maßverkörperung ferngehalten werden, da sie zur Zerstörung der oftmals aus Glas bestehenden Maßverkörperung führen könnten. Ferner soll die Befestigungsvorrichtung verhältnismäßig große Anbautoleranzen zulassen.

Diese Aufgabe wird durch eine Meßeinrichtung mit den Merkmalen des Anspruches 1 gelöst.

Vorteilhaft kann die Erfindung mit Merkmalen der abhängigen Ansprüche ausgestaltet werden.

Gegenüber dem Stand der Technik weist die erfindungsgemäße Meßeinrichtung den Vorteil auf, daß thermisch bedingte Längenänderungen des Maschinen-Bauteiles in gleicher Weise bei der Maßverkörperung erfolgen, auch wenn diese aufgrund ihrer Materialeigenschaften einen anderen Temperaturkoeffizienten hat, als das Maschinen-Bauteil. Temperaturbedingte Spannungen, die in anderer als in Längsrichtung der Maßverkörperung auftreten, werden nicht auf diese übertragen und können somit nicht zu Störungen des Meßbetriebes und schon gar nicht zur Zerstörung der Maßverkörperung führen, auch wenn diese aus Glas besteht.

Mit Hilfe eines Ausführungsbeispieles soll die Erfindung anhand der Zeichnungen näher erläutert werden.

Es zeigt:

Figur 1 eine schematisierte Längenmeßeinrichtung;

Figur 2 ein Befestigungselement mit Stelleinrichtung als Ausschnittvergrößerung.

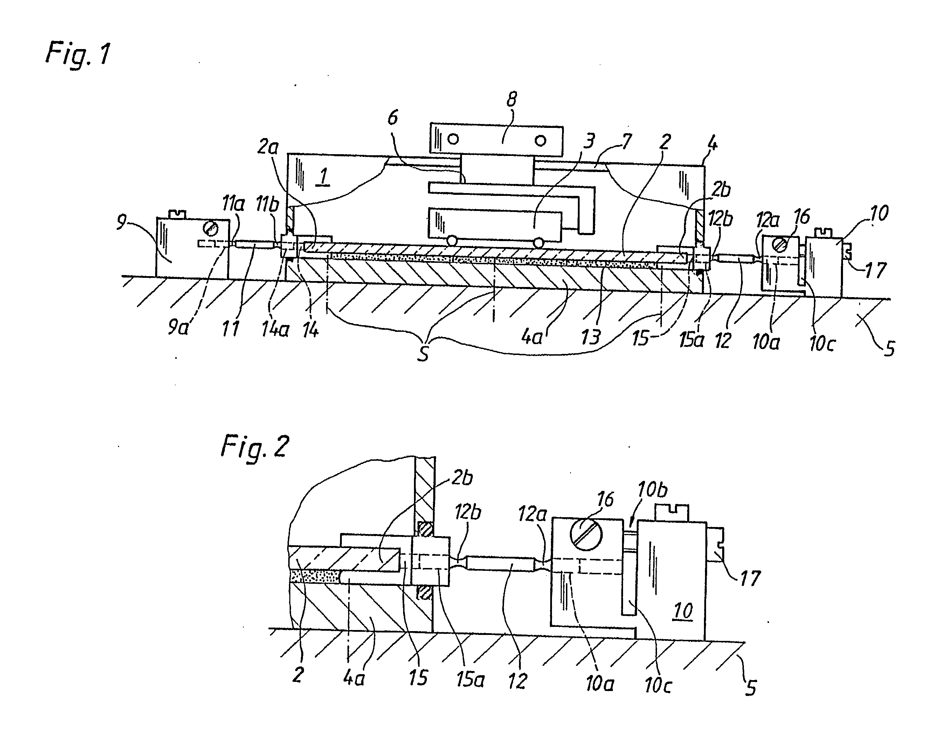

Eine in Figur 1 dargestellte Längenmeßeinrichtung 1 weist zum Schutze einer Maßverkörperung 2 und einer zugehörigen Abtasteinrichtung 3 ein Gehäuse 4 auf. Das Gehäuse 4 ist im wesentlichen allseitig geschlossen und fest mit einem Maschinen-Bauteil 5 verbunden. Diese Befestigung kann beliebig, z. B. mit Schrauben, erfolgen. Diese Schrauben sind durch strichpunktierte Linien S angedeutet. Die Abtasteinrichtung 3 ist gelenkig mit einem Mitnehmer 6 verbunden, der durch einen Längsschlitz 7 im Gehäuse 4 nach außen führt und dort einen Montagefuß 8 trägt, mit dem die Abtasteinrichtung 3 an einem zweiten Maschinen-Bauteil befestigt werden kann. Das zweite Maschinen-Bauteil ist nicht gezeigt, da es zur Verdeutlichung der Erfindung nicht beitragen kann. Mit der Längenmeßeinrichtung 1 werden die Relativbewegungen zwischen dem Maschinen-Bauteil 5 und dem zweiten, nicht dargestellten Maschinen-Bauteil in bekannter Weise gemessen.

Die gattungsgemäßeh Meßeinrichtungen 1 haben eine Genauigkeit respektive Auflösung von wenigen μm, sodaß Temperaturabweichungen von der Normaltemperatur sich unmittelbar auf das Meßergebnis auswirken. Häufig werden derartige Meßeinrichtungen an Werkzeugmaschinen eingesetzt, die sich während der Bearbeitung von Werkstücken erwärmen. Wenn die Maßverkörperung 2 sich nicht in gleicher Weise erwärmt wie die Maschine, oder wenn sie einen anderen Temperaturkoeffizienten als diese hat, so kann es zu Meßfehlern kommen, die auf unterschiedliche Längenänderungen von Maßverkörperung 2 und Maschinen-Bauteil 5 zurückzuführen sind. Wie bereits eingangs erwähnt, sind verschiedene Lösungen für dieses Problem bereits bekannt.

Neuere Entwicklungstendenzen gehen dahin, der Maßverkörperung 2 die Längenänderungen des Maschinen-Bauteils 5 aufzuzwingen, damit die Meßwert-Ablesung immer dem Temperaturgang vorzeichenrichtig folgt. Eine Folge dieser Maßnahme ist, daß auf die Maßverkörperung 2 Zwangskräfte einwirken. Um die Zwangskräfte auf die Maßverkörperung 2 übertragen zu können, müssen die Befestigungselemente 9 und 10 steif genug sein.

Eine völlig steife Befestigung der Maßverkörperung 2 mit den Befestigungselementen 9 und 10 am Maschinen-Bauteil 5 ist jedoch aus verschiedenen Gründen kritisch. Zum einen kann durch die temperaturbedingten Änderungen der Abmessungen - die ja nicht nur in einer Koordinatenrichtung auftreten - die Maßverkörperung 2 durch Spannungskräfte so beeinflußt werden, daß sie zerstört wird oder zumindest nicht mehr maßhaltig ist. Ferner ist eine völlig steife Befestigung der Maßverkörperung 2 am Maschinen-Bauteil 5 auch bereits bei der Montage problematisch, da Anbautoleranzen einzuhalten sind, die bei der geforderten Meßgenauigkeit naturgemäß sehr eng bemessen sein müssen.

Erfindungsgemäß werden zwischen den stirnseitigen Enden 2a und 2b sowie den Befestigungselementen 9 und 10 Kupplungen 11 und 12 angeordnet, die in Längsrichtung der Maßverkörperung 2 biegesteif, jedoch in allen anderen Richtungen geringfügig beweglich sind. Durch diese Maßnahme können keine anderen Kräfte auf die Maßverkörperung 2 übertragen werden, als Druck- oder Zugkräfte in Längsrichtung der Maßverkörperung 2.

Die Kupplungen 11 und 12 sind also winkelbeweglich, was durch jeweils zwei Gelenke in Form von Schwachstellen 11a, 11b bzw. 12a, 12b erreicht wird.

Um bei der Übertragung von Druckkräften - wenn die Maschine abkühlt - Knickungen der Maßverkörperung 2 zu verhindern, wird die Maßverkörperung 2 mit Hilfe eines elastischen Klebers 13 auf einem Trägerkörper 4a aufgekittet, der Bestandteil des Gehäuses 4 sein kann. Durch die elastische Kittung bleibt die Längsverschieblichkeit der Maßverkörperung 2 gegenüber dem Gehäuse 4 erhalten, aber eine Auslenkung (Knickung) in einer Richtung quer zur Längserstreckung der Maßverkörperung 2 wird praktisch ausgeschlossen.

Ein in Figur 2 dargestellter Ausschnitt zeigt u. a. die Kupplung 12 in der Vergrößerung deutlicher. Jeweils an einem Ende ist die Kupplung 12 im zugehörigen Befestigungselement 10 fixiert, das andere Ende befindet sich in einer Klemmvorrichtung 15, die das stirnseitige Ende 2b der Maßverkörperung 2 umgreift und mit dieser fest verbunden ist. Eine gleichartige Klemmvorrichtung 14 befindet sich am anderen Ende 2a der Maßverkörperung 2. In der Klemmvorrichtung 15 und in dem Befestigungselement 10 befinden sich jeweils Bohrungen 15a und 10a zur Aufnahme von jeweils einem Ende der Kupplung 12. Am Befestigungselement 10 ist gezeigt, daß ein nicht näher bezeichneter Längsschlitz im Befestigungselement 10 bis zur Bohrung 10a durchgeführt ist. In bekannter Weise ist oberhalb der Bohrung 10a quer zu dieser Bohrung 10a und zum Längsschlitz eine weitere Bohrung vorgesehen, in die eine Klemmschraube 16 eingesetzt ist. Mit dieser Klemmschraube 16 kann der Längsschlitz verengt werden, so daß das in der Bohrung 10 befindliche Ende 12a der Kupplung 12 fest eingeklemmt wird.

Die Klemmvorrichtung 15, die das Maßverkörperungsende 2b von der Stirn-, Ober- und Unterseite umgreift, ist mit einem Kleber fixiert. Der Umgriff kann auch an allen Seiten des Maßverkörperungsendes 2b erfolgen, es muß auf jeden Fall sicher gestellt sein, daß mittels dieser Klemmvorrichtung 15 nicht nur Druck-, sondern auch Zugkräfte auf die Maßverkörperung 2 übertragen werden können. Diese Aussagen treffen natürlich sinngemäß auch auf das nicht vergößert dargestellte andere Ende 2a der Maßverkörperung 2 zu.

Eine Besonderheit des vergrößert dargestellten Befestigungselementes 10 ist die integrierte Einstellvorrichtung 10b. Da derartige Einstellvorrichtungen 10b im Prinzip bereits bekannt sind (beispielsweise aus der DE-PS 27 12 421), soll die Funktion nur kurz erläutert werden: Das Befestigungselement 10 ist parallel zum Ende 2b der Maßverkörperung 2 so weit geschlitzt, daß aufgrund des Schlitzes 10c eine Art Gelenk entsteht. In dem auf dem Maschinen-Bauteil 5 fixierten Teil des Befestigungselementes 10 ist eine Gewindebohrung in Längsrichtung der Maßverkörperung 2 eingebracht, in der sich eine Justierschraube 17 befindet. Das freie Ende der Justierschraube 17 greift jenseits des Schlitzes 10c in das Teil des Befestigungselementes 10 ein, in dem das Kupplungsende 12a befestigt ist. Mit Hilfe der Justierschraube 17 kann nun dieser Teil des Befestigungselementes 10 geringfügig um das durch den Schlitz 10c entstandene Gelenk gekippt werden. Diese Kippbewegung wird durch die winkelbewegliche Kupplung 12 in eine Zug- oder Druckbewegung in Längsrichtung der Maßverkörperung 2 umgewandelt. Auf diese Weise wird die Maßverkörperung 2 gestreckt oder gestaucht. Die Einstellvorrichtung 10b stellt also eine an sich bekannte Eichvorrichtung dar, mit der beispielsweise die Grundeinstellung der Maßverkörperung 2 erfolgen kann. Auch zu Korrekturzwecken ist sie geeignet.

Im Meßbetrieb wirkt die Einstellvorrichtung 10b jedoch nicht, das Befestigungselement 10 ist als in sich starres Element zu betrachten, das thermisch bedingte Längenänderungen genauso auf die Maßverkörperung 2 überträgt, wie das Befestigungselement 9.

Aus dem Vorstehenden wird deutlich, daß durch die winkelbeweglichen, jedoch in Meßrichtung steifen Kupplungen 11 und 12 auch die Montage der Meßeinrichtung 1 am Maschinen-Bauteil 5 sehr vereinfacht wird. Durch die möglichen Winkelbewegungen der Kupplungen 11 und 12 ist eine Abweichung von der Fluchtung bei der Montage der Befestigungselemente 9 und 10 zulässig. Durch die Einstellbarkeit des Befestigungselementes 10 ist eine Abweichung in Längsrichtung bei der Montage zulässig.

Die erfindungsgemäße Vorrichtung weist also nicht nur im Meßbetrieb, sondern auch schon bei der Montage erhebliche Vorteile gegenüber dem Stand der Technik auf.

## Patentansprüche

1. Meßeinrichtung zur Bestimmung der Relativlage zweier Objekte, wie Bett und Schlitten einer Maschine, mit einer biegesteifen Maßverkörperung, (2) die mittels Befestigungselementen (9, 10) an einem der Maschinen-Bauteile (5) befestigt ist, dadurch gekennzeichnet, daß zwischen den stirnseitigen Enden (2a, 2b) der Maßverkörperung (2) und den Befestigungselementen (9, 10) jeweils winkelbewegliche, nur in Längsrichtung der Maßverkörperung (2) steife Kupplungsmittel (11, 12) derart angeordnet sind, daß Längenänderungen des Maschinen-Bauteiles (5) im Bereich zwischen den Befestigungselementen (9, 10) querkraftfrei auf die Maßverkörperung (2) übertragen werden.

2. Meßeinrichtung nach Anspruch 1, dadurch gekennzeichnet, daß die Maßverkörperung (2) an ihren stirnseitigen Enden (2a, 2b) Klemmvorrichtungen (14, 15) aufweist, durch die Zug- und Druckkräfte auf die Maßverkörperung (2) übertragen werden können.

3. Meßeinrichtung nach den Ansprüchen 1 und 2, dadurch gekennzeichnet, daß die Befestigungselemente (9, 10) und die Klemmvorrichtungen (14, 15) Einrichtungen (9a, 10a; 14a, 15a) zur Aufnahme der Kupplungsmittel (11, 12) aufweisen.

4. Meßeinrichtung nach Anspruch 1, dadurch gekennzeichnet, daß die Kupplungsmittel von Stäben (11, 12) gebildet werden, die Gelenke in Form von Schwachstellen (11a, 11b; 12a, 12b) aufweisen.

5. Meßeinrichtung nach Anspruch 1, dadurch gekennzeichnet, daß wenigstens eines der Befestigungselemente (10) eine Einstellvorrichtung (10b) zum Einstellen der Länge der Maßverkörperung (2) aufweist.

## Claims

1. Measuring device for determining the relative position of two objects, such as the bed and slide of a machine, with a scale unit (2) stiff against bending, which is fixed on one of the machine components (5) by means of fixing elements (9, 10), characterized in that coupling means (11, 12) angularly movable, stiff only in the longitudinal direction of the scale unit (2) are so arranged between the ends (2a, 2b) at the ends of the scale unit (2) and the fixing elements (9, 10) that length alterations of the machine component (5) in the region between the fixing elements (9, 10) are transmitted free from transverse forces to the scale unit (2).

2. Measuring device according to claim 1, characterized in that the scale unit (2) has clamping devices (14, 15) at its ends (2a, 2b) at the ends, through which compressive and tensile forces can be transmitted to the scale unit (2).

3. Measuring device according to claims 1 and 2, characterized in that the fixing elements (9, 10) and the clamping devices (14, 15) have devices (9a, 10a; 14a, 15a) for receiving the coupling means (11, 12).

4. Measuring device according to claim 1, characterized in that the coupling means are formed from rods (11, 12) which have joints in the form of weak places (11a, 11b; 12a, 12b).

5. Measuring device according to claim 1, characterized in that at least one of the fixing elements (10) has an adjusting device (10b) for setting the length of the scale unit (2).

## Revendications

1. Dispositif de mesure pour déterminer la position relative de deux objets, tels que le banc et le chariot d'une machine-outil, comprenant une règle de mesure (2) rigide en flexion qui est fixée au moyen d'éléments de fixation (9, 10) à l'un des éléments de machine (5), caractérisé par le fait qu'entre les extrémités frontales (2a, 2b) de la règle de mesure (2) et les éléments de fixation (9, 10) sont disposés chaque fois des moyens d'accouplement (11, 12) mobiles angulairement, rigides uniquement dans la direction longitudinale de la règle de mesure (2), de telle manière que des variations de longueur de l'élément de machine (5) dans la zone située entre les éléments de fixation (9, 10) soient transmises de façon exempte d'efforts transversaux à la règle de mesure (2).

2. Dispositif de mesure suivant la revendication 1, caractérisé par le fait que la règle de mesure (2) présente, à ses extrémités frontales (2a, 2b), des dispositifs de serrage (14, 15) par lesquels des efforts de traction et de compression peuvent être transmis à la règle de mesure (2).

3. Dispositif de mesure suivant les revendications 1 et 2, caractérisé par le fait que les éléments de fixation (9, 10) et les dispositifs de serrage (14, 15) présentent des dispositifs (9a, 10a; 14a, 15a) pour recevoir les moyens d'accouplement (11, 12).

4. Dispositif de mesure suivant la revendication 1, caractérisé par le fait que les moyens d'accouplement sont constitués par des barreaux (11, 12) qui présentent des articulations sous la forme d'emplacements d'affaiblissement (11a, 11b; 12a, 12b).

5. Dispositif de mesure suivant la revendication 1, caractérisé par le fait qu'au moins l'un des éléments de fixation (10) présente un dispositif de réglage (10b) pour le réglage de la longueur de la règle de mesure (2).

*Fig.1*

*Fig.2*

EP 0 284 671 B1